# EUROPÄISCHE PATENTSCHRIFT

(11) **EP 2 804 774 B1**
(45) Veröffentlichungstag und Bekanntmachung des Hinweises auf die Patenterteilung: **23.03.2016**
(21) Anmeldenummer: 12809768.0
(22) Anmeldetag: 18.12.2012
(51) Int. Cl.: B60G 21/073, B62D 33/06

(54) **FAHRERHAUS-AUFHÄNGUNGSEINRICHTUNG MIT WANKSTABILISIERUNG**
DRIVER'S CAB SUSPENSION DEVICE WITH ROLL STABILIZING MEANS
DISPOSITIF DE SUSPENSION DE CABINE DE CONDUITE À STABILISATION DE ROULIS

(30) Priorität: 18.01.2012 DE 102012200670
(43) Veröffentlichungstag der Anmeldung: 26.11.2014
(73) Patentinhaber: ZF Friedrichshafen AG, 88046 Friedrichshafen (DE)
(72) Erfinder: SCHAUER, Michael, 49086 Osnabrück (DE); EISMANN, Jens, 49326 Melle (DE); HELM, Eike, 49356 Diepholz (DE); QUAING, Matthias, 48488 Emsbüren (DE); BUBLIES, Holger, 49078 Osnabrück (DE)
(86) Internationale Anmeldenummer: PCT/EP2012/075931
(87) Internationale Veröffentlichungsnummer: WO 2013/107584

(56) Entgegenhaltungen:
- EP-A1- 1 764 242
- BE-A3- 1 018 970
- DE-A1- 19 853 876
- DE-A1-102008 063 812
- US-B1- 7 216 925

## Beschreibung

Die Erfindung betrifft eine Aufhängungseinrichtung zur federnden und stoßdämpfenden Aufhängung einer Kraftfahrzeug-Fahrerkabine, relativ zu einem Fahrzeugchassis, gemäß dem Oberbegriff des Patentanspruchs 1.

Gattungsgemäße Aufhängungseinrichtungen der eingangs genannten Art kommen beispielsweise, jedoch keineswegs ausschließlich, bei Lastkraftwagen, landwirtschaftlichen Fahrzeugen oder Schwerlastfahrzeugen zum Einsatz. Da bei derartigen Fahrzeugen die Feder- bzw. Dämpferraten der Feder/Dämpfereinheiten des Fahrwerks aufgrund erheblicher Fahrzeuggewichte sowie aufgrund der hohen ungefederten Massen im Fahrwerk vergleichsweise hoch gewählt werden müssen, werden Fahrbahnunebenheiten oder auch Schwingungen aus Achsen und Antriebsstrang zunächst noch zu einem erheblichen Teil über die Achsfederung auf das Chassis übertragen. Aus diesem Grund ist es erforderlich, die Fahrerkabine mittels einer geeigneten Aufhängungseinrichtung nochmals separat vom Fahrzeugchassis zu entkoppeln.

Um bei gattungsgemäßen elastischen Aufhängungsvorrichtungen für Fahrerkabinen unerwünschtes Wanken der Kabine relativ zum Fahrzeugchassis zu dämpfen bzw. einzuschränken - beispielsweise bei Schräg- und Kurvenfahrt oder im Fall einseitiger Fahrbahnunebenheiten - weisen Aufhängungsvorrichtungen für Fahrerkabinen üblicherweise eine Einrichtung zur Wankstabilisierung auf. Diese sorgt dafür, dass Einfederungsbewegungen der Kabine relativ zum Chassis im Wesentlichen linear erfolgen, dass also die Bewegungsfreiheitsgrade zwischen Kabine und Chassis auf eine hauptsächlich vertikale Einfederungsbewegung reduziert werden.

Aus der DE 10 2007 052 038 A1 und BE 1018970 ist eine Einrichtung zur hydraulischen Wankstabilisation für ein Fahrerhaus bekannt, bei der die Zylinderräume rechts- und linksseitiger Schwingungsdämpfer der Kabinenaufhängung überkreuz miteinander verbunden sind, um auf diese Weise das gleichsinnige Einfedern der rechts- und linksseitigen Kabinenaufhängung zu begünstigen, und das gegensinnige Einfedern zu unterdrücken, um also mit anderen Worten eine Wankstabilisierung für die Fahrerkabine zu bewirken.

Diese bekannte Aufhängungseinrichtung ist konstruktiv jedoch vergleichsweise aufwändig und unterliegt einer Bauraumproblematik, insbesondere da sie im vorderen Bereich der Fahrerkabine angeordnet ist, wo vergleichsweise wenig Bauraum zur Unterbringung der Bestandteile und Baugruppen der Aufhängungseinrichtung zur Verfügung steht. Auch benötigt diese bekannte Aufhängungseinrichtung noch eine vergleichsweise hohe Anzahl an Einzelteilen bzw. Baugruppen, was tendenziell mit hohen Herstellungs- und Montagekosten verbunden ist. Ferner ist die Anpassung an verschiedene Fahrzeugklassen und damit Federungs-, Dämpfungs- bzw. Wankkennlinien bei der bekannten Aufhängungseinrichtung vergleichsweise aufwändig.

Mit diesem Hintergrund ist es Aufgabe der vorliegenden Erfindung, eine Aufhängungseinrichtung bereitzustellen, mit der sich die im Stand der Technik vorhandenen Einschränkungen überwinden lassen. Insbesondere soll die Aufhängungseinrichtung konstruktiv und bezüglich der Montage am Kraftfahrzeug einfach ausgebildet sein sowie mit einer möglichst geringen Anzahl an Bauteilen auskommen. Ferner soll die Aufhängungseinrichtung mit möglichst geringem Aufwand an unterschiedliche Einsatzzwecke und Fahrzeugklassen angepasst werden können.

Diese Aufgabe wird durch eine Aufhängungseinrichtung mit den Merkmalen des Patentanspruchs 1 gelöst.

Bevorzugte Ausführungsformen sind Gegenstand der Unteransprüche.

Die Aufhängungseinrichtung dient zur federnden und dämpfenden Aufhängung einer Fahrerkabine eines Kraftfahrzeugs, insbesondere bei einem Lastkraftwagen, relativ zum Fahrzeugchassis. Hierzu umfasst die Aufhängungseinrichtung eine Feder/Dämpfer-Anordnung und eine Hydraulikanordnung mit fahrtrichtungsbezogen rechts- und linksseitigen hydraulischen Zylindern. Die doppelt wirkenden Hydraulikzylinder besitzen jeweils kolbenobenseitige und kolbenuntenseitige Zylinderräume, wobei die kolbenobenseitigen und kolbenuntenseitigen Zylinderräume der rechts- und linksseitigen Hydraulikzylinder fluidisch überkreuz miteinander verbunden sind, wodurch eine hydraulische Wankstabilisierungseinrichtung gebildet wird. So ist jeweils ein kolbenobenseitiger Zylinderraum des einen Hydraulikzylinders mit einem kolbenuntenseitigen Zylinderraum des anderen Hydraulikzylinders verbunden und unmgekehrt.

Durch die Erfindung wird die Aufhängungseinrichtung dahingehend weitergebildet, dass im hinteren Aufhängungsbereich der Fahrerkabine eine obere Querbrücke, und am Fahrzeugchassis eine der oberen Querbrücke zugeordnete untere Querbrücke angeordnet ist. Dabei sind Feder/Dämpfer-Anordnung und Hydraulikanordnung zwischen den beiden Querbrücken positioniert und mit den Querbrücken verbunden.

Dies bedeutet mit anderen Worten zunächst, dass die Einrichtung zur hydraulischen Wankstabilisierung nicht mehr vorne am Fahrerhaus, sondern im hinteren Bereich des Fahrerhauses angeordnet wird, wo eine größere Flexibilität bezüglich des zur Verfügung stehenden Bauraums und bezüglich der Anordnung der Bauteile und Baugruppen der Aufhängungseinrichtung gegeben ist. Ferner sind bei der Erfindung obere und untere Querbrücken im hinteren Bereich des Fahrerhauses vorgesehen, zwischen denen die Feder/Dämpfer-Anordnung und die Hydraulikanordnung und damit auch die Einrichtung zur Wankstabilisierung angeordnet sind.

Dank der Anordnung der Einrichtung zur Wankstabilisierung zwischen der oberen und der unteren Querbrücke sowie im hinteren Bereich der Fahrerkabine können vorzugsweise sämtliche Bauteile und Baugruppen der Wankstabilisierungseinrichtung unmittelbar im Bereich der oberen und unteren Querbrücken vereinigt und zwischen oberer und unterer Querbrücke angeordnet werden. Hierdurch ergibt sich (durch die Querbrücken) nicht nur eine erhöhte Steifigkeit der Aufhängungseinrichtung bzw. der Wankstabilisierungseinrichtung im hinteren Bereich der Fahrerkabine, sondern auch eine geschützte Anordnung der Bauteile, insbesondere der hydraulischen Baugruppen und der Hydraulikleitungen zwischen den links- und rechtsseitigen Hydraulikzylindern der Aufhängungseinrichtung.

Auch werden die beim Stand der Technik vorhandenen Bauraumprobleme im vorderen Bereich des Fahrerhauses gelöst, wobei sich gleichzeitig Kostenvorteile durch eine mögliche Funktionsintegration der Bauteile bzw. Baugruppen der Aufhängungseinrichtung im hinteren Bereich des Fahrerhauses ergeben. Ferner kann die Aufhängungseinrichtung - insbesondere aufgrund der Anordnung vorzugsweise sämtlicher Bauteile und Baugruppen an und zwischen oberer und unterer Querbrücke - als verhältnismäßig leicht austauschbares Modul gestaltet werden, welches wiederum Standardschnittstellen zur Anbindung an Fahrerhaus und Chassis aufweisen kann. Auf diese Weise kann die Aufhängungseinrichtung ohne großen Modifikationsaufwand - insbesondere bezüglich der hydraulischen Komponenten - an verschiedenste Fahrzeuggruppen bzw. -Klassen angepasst werden.

Die Erfindung wird unabhängig davon verwirklicht, welcher Art die Feder/Dämpfer-Anordnung der Aufhängungseinrichtung ist. So kann die Feder/Dämpfer-Anordnung beispielsweise Stahlfedern enthalten. Gemäß einer bevorzugten Ausführungsform der Erfindung ist die Feder/Dämpfer-Anordnung jedoch durch fahrzeugbezogen links- und rechtsseitige Luftfederelemente gebildet. Vorzugsweise sind dabei die Hydraulikzylinder der Wankstabilisierungseinrichtung im Inneren der Luftfederelemente angeordnet.

Luftfedern sind vorteilhaft im Hinblick auf geringes Gewicht sowie im Hinblick auf die Variabilität ihrer Kennlinie durch einfache Änderung des Luftdrucks. Zudem können die Hydraulikzylinder der Wankstabilisierungseinrichtung im Inneren der Luftfederelemente angeordnet werden, wodurch sich eine erhebliche Bauraumersparnis, eine Reduzierung der Anzahl der Baugruppen sowie eine Massereduzierung bezüglich der gesamten Aufhängungseinrichtung ergibt.

Nach einer weiteren bevorzugten Ausführungsform der Erfindung umfasst die Feder/Dämpfer-Anordnung eine einzige zwischen den Querbrücken sowie in Fahrzeugquerrichtung mittig angeordnete Federeinrichtung, vorzugsweise ein einzelnes Luftfederelement. Auf diese Weise benötigt die Aufhängungseinrichtung für den hinteren Bereich der Kabinenlagerung nur noch eine einzige Federeinrichtung, insbesondere Luftfeder. Aufgrund der Querbrücken ergeben sich dabei jedoch keine Einschränkungen bezüglich der Federeigenschaften oder der Steifigkeit der hinteren Kabinenlagerung. Mit dieser Ausführungsform ist somit eine weitere Reduzierung der Anzahl an Einzelteilen bzw. Baugruppen sowie eine entsprechende Masse- und Kostenreduzierung verbunden.

Weitere, besonders bevorzugte Ausführungsformen der Erfindung sehen vor, dass die fluidische Überkreuzverbindung zwischen den Hydraulikzylindern zumindest eine Drosseleinrichtung und/oder zumindest eine Druckspeichereinrichtung umfasst. Dank einer Drosseleinrichtung können - insbesondere in Verbindung mit einer Druckspeichereinrichtung - durch die Hydraulikzylinder und deren überkreuz verlaufende fluidische Verbindung auch Dämpfungsfunktionen für die Wankstabilisierungseinrichtung bzw. für die Fahrerkabinen-Aufhängung übernommen werden. Dies bedeutet, dass zusätzliche Stoß- bzw. Schwingungsdämpfer zumindest im hinteren Bereich der Kabinenaufhängung ggf. entfallen können, da deren Funktion durch die Hydraulikzylinder der Wankstabilisierungseinrichtung mit übernommen werden kann.

Eine weitere bevorzugte Ausführungsform der Erfindung sieht vor, dass die fluidische Verbindung zwischen den Hydraulikzylindern Komponenten zur aktiven Dämpfungsregelung, wie beispielsweise steuerbare Drosselglieder, steuerbare Druckspeicher und/oder Pumpen zur Druckänderung für den bzw. die Druckspeicher umfasst. Auf diese Weise können Verhalten und Kennlinie der Wankstabilisierungseinrichtung in weiten Grenzen aktiv verändert werden, ggf. auch in Echtzeit während des Fahrbetriebs des Kraftfahrzeugs, in Abhängigkeit von Fahrdynamik-Kennwerten wie Geschwindigkeiten und Beschleunigungen.

Dank der (ggf. steuerbaren) Druckspeicher und/oder Drosselglieder ist die Wankstabilisierungseinrichtung bzw. Aufhängungseinrichtung zudem sehr flexibel, und je nach Anforderungsart variabel einsetzbar. Dies bedeutet, dass die Aufhängungseinrichtung in verschiedenen Fahrerhausvarianten eingesetzt werden kann, ohne die hydraulischen Elemente grundlegend neu entwickeln oder neu dimensionieren zu müssen. Vielmehr bedarf es in diesem Fall meist nur einer Anpassung der Systemdrücke oder des Druckspeichertyps, um die Aufhängungseinrichtung für eine andere Fahrerhausvariante anzupassen.

Weitere bevorzugte Ausführungsformen der Erfindung sehen vor, dass zwischen der oberen und der unteren Querbrücke eine im Wesentlichen horizontal wirkende Querdämpfer-Einrichtung, oder ein Panhardstab zur horizontalen Stabilisierung angeordnet ist. Mit der horizontal wirkenden Querdämpfer-Einrichtung oder mit dem Panhardstab lässt sich der Freiheitsgrad der Fahrerkabine entlang der Fahrzeugquerrichtung definiert fixieren bzw. kontrollieren. Insbesondere beim Einsatz eines Panhardstabs ergibt sich damit eine konstruktiv einfache und robuste Darstellung der Stabilisierung in Fahrzeugquerrichtung.

Im Folgenden wird die Erfindung anhand lediglich Ausführungsbeispiele darstellender Zeichnungen näher erläutert. Dabei zeigt:
Fig. 1: eine Ausführungsform einer Aufhängungseinrichtung gemäß der vorliegenden Erfindung mit hydraulischer Wankstabilisierung;
Fig. 2: eine Schemadarstellung für die hydraulische Wankstabilisierung der Aufhängungseinrichtung gemäß Fig. 1;
Fig. 3: eine Ausführungsform einer Aufhängungseinrichtung gemäß der vorliegenden Erfindung mit Panhardstab;
Fig. 4: eine Ausführungsform für eine Aufhängungseinrichtung gemäß der vorliegenden Erfindung mit integrierten Feder-/Dämpferelementen; und
Fig. 5: eine Ausführungsform für eine Aufhängungseinrichtung gemäß der vorliegenden Erfindung mit einer zentralen Luftfeder.

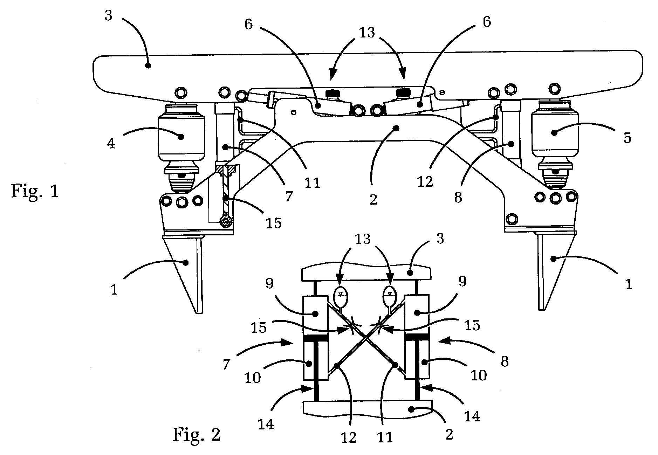

Fig. 1 zeigt eine Ausführungsform einer Aufhängungseinrichtung gemäß der vorliegenden Erfindung zur Montage zwischen einem Lkw-Chassis 1 und einem Lkw-Fahrerhaus, mit Blick entlang der Fahrtrichtung von hinten auf das Heck des (nicht dargestellten) Fahrerhauses.

Man erkennt das nur ausschnittsweise dargestellte Chassis 1 des Lastkraftwagens, auf welchem zunächst eine untere Querbrücke 2 montiert ist. Im Heckbereich der Fahrerkabine ist eine korrespondierende, obere Querbrücke 3 angeordnet und mit der Fahrerkabine verbunden.

Zwischen oberer Querbrücke 3 und unterer Querbrücke 2 sind die Bauteile bzw. Funktionsbaugruppen der Aufhängungseinrichtung angeordnet, wodurch sich zunächst einmal eine Modulbauweise der gesamten Aufhängungseinrichtung ergibt. Die Aufhängungseinrichtung kann somit als komplettes Modul vormontiert werden, und ist dann lediglich noch mit entsprechend vorbereiteten Schnittstellen am Chassis 1 und am Fahrerhaus zu verbinden. Hierdurch wird die Variantenbildung und Kompatibilität der Aufhängungseinrichtung mit verschiedensten Anforderungsprofilen bzw. Fahrzeugtypen erheblich erleichtert.

Die Aufhängungseinrichtung umfasst zunächst einmal zwei Luftfeder-/Dämpfereinrichtungen 4 und 5, welche jeweils außenseitig zwischen oberer Querbrücke 3 und unterer Querbrücke 2 angeordnet, sowie mit den Querbrücken 2, 3 gelenkig verbunden sind. Die Luftfeder-/Dämpfereinrichtungen dienen dabei der federnden und dämpfenden Aufhängung der Fahrerkabine (mit der oberen Querbrücke 3) gegenüber dem Chassis 1. Zur Dämpfung von Schwingungen zwischen Fahrerkabine und Chassis 1 in Fahrzeugquerrichtung umfasst die in Fig. 1 dargestellte Aufhängungseinrichtung ferner zwei Querdämpfer 6, welche mit ihren jeweiligen Enden ebenfalls jeweils mit unterer bzw. oberer Querbrücke 2, 3 verbunden sind.

Zudem ist zwischen unterer und oberer Querbrücke 2, 3 eine Einrichtung zur hydraulischen Wankstabilisierung angeordnet, welche zwei Hydraulikzylinder 7, 8 umfasst. Die Hydraulikzylinder 7, 8 weisen jeweils kolbenobenseitige Zylinderräume 9 und kolbenuntenseitige Zylinderräume bzw. Ringräume 10 auf (vgl. Fig. 2). Dabei sind die Zylinderräume 9 und die Ringräume 10 über Druckleitungen 11, 12 fluidisch überkreuz miteinander verbunden.

Insbesondere Fig. 2 zeigt ferner, dass jede der beiden Druckleitungen 11, 12 mit einem Druckspeicher 13 verbunden ist. Die Druckspeicher 13 sind zunächst einmal erforderlich, um beim gleichsinnigen Einfedern der beiden hydraulischen Zylinder 7, 8 die zwischen Zylinderraum 9 und Ringraum 10 - aufgrund des Querschnitts der jeweiligen Kolbenstange 14 - unterschiedlichen Verdrängungsvolumina auszugleichen.

Zudem erlauben die Druckspeicher 13 auch begrenzte Wankbewegungen zwischen Fahrerhaus (bzw. oberer Querbrücke 3) und Chassis 1 (bzw. unterer Querbrücke 2). Derartige Wankbewegungen sind entsprechend mit einem gegensinnigen Einfedern der beiden hydraulischen Zylinder 7, 8 verbunden. Ohne die Druckspeicher 13 wäre jegliche Wankbewegung - aufgrund der fluidischen Überkreuzverbindung zwischen den beiden Hydraulikzylindern 7, 8 - starr unterbunden. Die Druckspeicher 13 und deren Auslegung entsprechen somit der Torsionssteifigkeit eines mechanischen (als Torsionsstab ausgeführten) Wankstabilisators.

Dabei müssen die Druckspeicher 13 jedoch nicht zwingend an den Hydraulikleitungen 11, 12 angeordnet sein. Stattdessen könnten die Druckspeicher 13 auch direkt an die Hydraulikzylinder 7, 8 angeschlossen werden.

Zum Ausgleich der unterschiedlichen Verdrängungsvolumina zwischen Zylinderraum 9 und Ringraum 10 ist mindestens ein Druckspeicher 13 pro Hydraulikkreis bzw. pro Druckleitung 11, 12 erforderlich. Es können jedoch auch zwei oder mehr Druckspeicher 13 pro Hydraulikkreis bzw. Druckleitung 11, 12 vorgesehen sein, um eventuell geforderte, spezielle Wankkennungen realisieren zu können. Ferner ist es möglich, durch gezielte Änderungen der Systemdrücke - beispielsweise durch Änderung der Gasdruck-Vorspannung der Druckspeicher - unterschiedliche Wankkennungen bzw. Wanksteifigkeiten zu erzeugen, ohne dass hierzu etwa Bauteile ausgewechselt werden müssten.

Ein weiterer vorteilhafter Effekt der Druckspeicher 13 liegt darin, dass die bei der Wankbewegung auftretenden Druckänderungen in den jeweiligen Druckspeichern 13 eine progressive Kennlinie der Wankstabilisierungseinrichtung zur Folge haben. Insgesamt ergibt sich durch die Druckspeicher 13 eine vergrößerte Flexibilität hinsichtlich der einfachen Abstimmung der Aufhängungseinrichtung bzw. der Wankstabilisierungseinrichtung auf den jeweiligen Einsatzzweck.

In den überkreuz angeordneten Druckleitungen 11, 12 sind beim dargestellten Ausführungsbeispiel (vgl. Fig. 2) ferner jeweils Drosseln 15 angeordnet. Die Drosseln 15 dämpfen den Flüssigkeitsstrom in den Druckleitungen 11, 12, so dass sich eine entsprechende Dämpfungswirkung zunächst einmal hinsichtlich der Wankbewegungen zwischen oberer Querbrücke 3 und unterer Querbrücke 2 ergibt.

Darüber hinaus können die Drosseln 15 jedoch auch zur Dämpfung von linearen Einfederungsbewegungen des Fahrerhauses gegenüber dem Chassis 1 eingesetzt werden, ebenso wie zur Dämpfung von Nickbewegungen des Fahrerhauses. Da gerade bei linearen Einfederungsbewegungen ein starker Flüssigkeitsstrom in den Druckleitungen 11, 12 erzeugt wird, können die Drosseln 15 eine effektive Dämpfung derartiger linearer Einfederungsbewegungen übernehmen. Dies kann insbesondere dazu genutzt werden, etwaige zusätzliche Stoßdämpfer (die im dargestellten Ausführungsbeispiel gemäß Fig. 1 innerhalb der Luftfederelemente 4, 5 angeordnet sind) entfallen zu lassen.

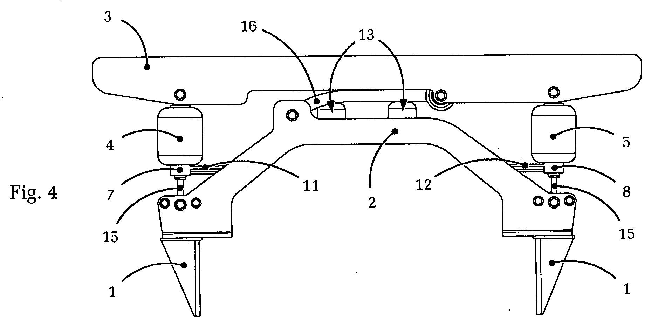

Mit anderen Worten wird es auf diese Weise möglich, die Funktion der Schwingungsdämpfung in die hydraulische Wankstabilisierungseinrichtung zu integrieren. Hierdurch ergibt sich eine vorteilhafte Funktionsintegration, wobei die zuvor noch erforderlichen Stoßdämpfer wegfallen können. Ein Beispiel für eine Aufhängungseinrichtung dieser Art ist in Fig. 4 dargestellt. Man erkennt dort im Vergleich zu Fig. 1 eine sehr kompakte Gestaltung der Wankstabilisierungseinrichtung, bei der die Hydraulikzylinder 7, 8 in die Luftfederelemente 4, 5 integriert wurden, wobei die zuvor in den Luftfederelementen 4, 5 enthaltenen Stoßdämpfer gleichzeitig entfallen.

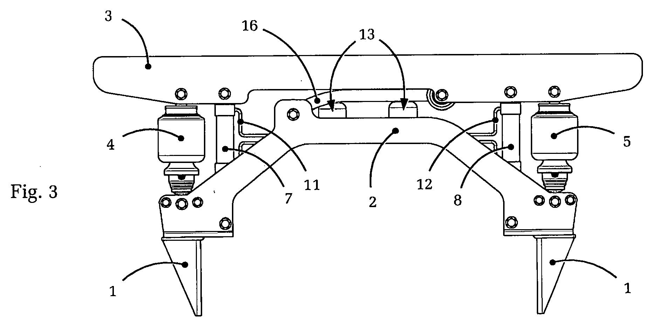

Fig. 3 zeigt eine weitere Ausführungsform einer Aufhängungseinrichtung, bei der im Unterschied zu der Ausführungsform gemäß Fig. 1 ein Panhardstab 16 die horizontale Stabilisierung zwischen oberer Querbrücke 3 und unterer Querbrücke 2 übernimmt. Auf diese Weise können die bei der Ausführungsform gemäß Fig. 1 noch erforderlichen Querdämpfer 6 entfallen. Der Panhardstab 16 kann dabei nicht nur stabilisierende, sondern auch stoß- und schwingungsdämpfende Funktionen erhalten, indem entsprechende, stoß- und/oder schwingungsdämpfende Elastomerlager zur Anbindung des Panhardstabs 16 an die unteren bzw. oberen Querbrücken 2, 3 gewählt werden.

Die Ausführungsform gemäß Fig. 4 entspricht im Hinblick auf die horizontale Stabilisierung mittels eines Panhardstabs 16 der Ausführungsform gemäß Fig. 3. Gegenüber den Ausführungsformen gemäß Fig. 1 und 3 wurden bei der Ausführungsform gemäß Fig. 4 zudem die hydraulischen Zylinder 7, 8 der Wankstabitisierungseinrichtung in den Innenraum der Luftfedern 4, 5 verlegt. Gleichzeitig entfallen bei der Ausführungsform gemäß Fig. 4 separate Stoß- bzw. Schwingungsdämpfer, wie sie bei den Ausführungsformen gemäß Fig. 1 und 3 noch vorhanden und innerhalb der Luftfedern 4, 5 angeordnet sind.

Die Aufgabe der bei den Ausführungsformen gemäß Fig. 1 und 3 noch vorhandenen vertikalen Stoß- bzw. Schwingungsdämpfer übernehmen bei der Ausführungsform gemäß Fig. 4 ebenfalls die hydraulischen Zylinder 7, 8, wobei diese hier gleichzeitig jeweils zu einer Baugruppe mit jeweils einer der Luftfedern 4, 5 vereinigt sind. Auf diese Weise ergibt sich eine weiter vereinfachte Gesamtbaugruppe für die Aufhängungseinrichtung mit einer verringerten Bauteilzahl, einem verringerten Gewicht und entsprechend reduzierbaren Kosten.

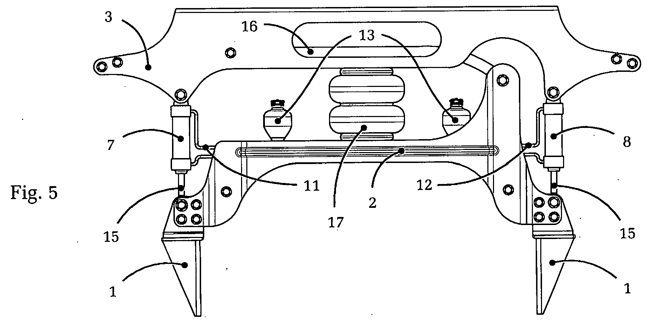

Fig. 5 schließlich zeigt eine weitere Ausführungsform für eine Aufhängungseinrichtung. Die Ausführungsform gemäß Fig. 5 unterscheidet sich von der Ausführungsform gemäß Fig. 4 dadurch, dass anstelle der beiden Luftfedern 4, 5 lediglich noch eine zentrale, entsprechend größer dimensionierte Luftfeder 17 vorgesehen ist, welche die Funktion der Stoßdämpfung zwischen der Fahrerkabine bzw. der oberen Querbrücke 3 und dem Chassis 1 bzw. der unteren Querbrücke 2 übernimmt. Die Funktionen der Wankstabilisierung ebenso wie der Schwingungsdämpfung werden (wie bei der Ausführungsform gemäß Fig. 4) auch bei der Ausführungsform gemäß Fig. 5 wieder von den Hydraulikzylindern 7, 8 (im Zusammenwirken mit den Druckleitungen 11, 12, dem Druckspeicher 13 sowie ggf. den Drosseln 15) übernommen.

Zur Erzeugung einer Seitenkraftbeeinflussung können die Hydraulikzylinder 7, 8 ggf. auch schräggestellt (bezüglich der Zeichenebene von Fig. 5) angeordnet werden. In diesem Fall ergibt sich (ähnlich wie bei der Ausführungsform gemäß Fig. 1, jedoch ohne die zusätzlichen horizontalen Dämpfer 6) beispielsweise die Möglichkeit, mit einer entsprechenden aktiven Steuerung der hydraulischen Wankstabilisierung eine geschwindigkeitsabhängige Kennung sowohl bezüglich der Wanksteifigkeit als auch bezüglich der Seitenkraftabstützung zu realisieren.

Man erkennt, dass insbesondere die Aufhängungseinrichtung gemäß Fig. 5 mit einem absoluten Minimum an Bauteilen bzw. Baugruppen auskommt, die zudem großenteils jeweils Mehrfachfunktionen übernehmen. Auf diese Weise lässt sich eine - modular einsetzbare bzw. montierbare - Aufhängungseinrichtung mit Wankstabilisierung darstellen, die mit geringem Bauteilaufwand und Bauraumbedarf leicht an unterschiedliche Randbedingungen bzw. Fahrzeugtypen anpassbar ist.

### Bezugszeichen

- 1: Chassis
- 2: untere Querbrücke
- 3: obere Querbrücke
- 4, 5: Feder/Dämpfer-Anordnung, Luftfederelement
- 6: Querdämpfer
- 7,8: Hydraulikzylinder
- 9: Zylinderraum
- 10: Zylinderraum, Ringraum
- 11, 12: Druckleitung
- 13: Druckspeicher
- 14: Kolbenstange
- 15: Drossel
- 16: Panhardstab
- 17: Luftfederelement

## Patentansprüche

1. Aufhängungseinrichtung zur federnden und dämpfenden Aufhängung einer Fahrerkabine eines Kraftfahrzeugs relativ zu einem Fahrzeugchassis (1), die Aufhängungseinrichtung umfassend eine Feder/Dämpfer-Anordnung (4, 5) und eine Hydraulikanordnung mit fahrtrichtungsbezogen rechts- und linksseitigen Hydraulikzylindern (7, 8) mit jeweils kolbenobenseitigen und kolbenuntenseitigen Zylinderräumen (9, 10), wobei die kolbenobenseitigen und kolbenuntenseitigen Zylinderräume (9, 10) der rechts- und linksseitigen Hydraulikzylinder (7, 8) fluidisch überkreuz zu einer hydraulischen Wankstabilisierungseinrichtung verbunden sind, **dadurch gekennzeichnet, dass** im hinteren Aufhängungsbereich der Fahrerkabine eine obere Querbrücke (3), und am Fahrzeugchassis (1) eine der oberen Querbrücke (3) zugeordnete untere Querbrücke (2) angeordnet ist, wobei Feder/Dämpfer-Anordnung (4, 5) und Hydraulikanordnung zwischen den beiden Querbrücken (2, 3) angeordnet und mit den Querbrücken (2, 3) verbunden sind.

2. Aufhängungseinrichtung nach Anspruch 1, **dadurch gekennzeichnet, dass** die Feder/Dämpfer-Anordnung (4, 5) durch fahrzeugbezogen links- und rechtsseitige Luftfederelemente (4, 5) gebildet ist, wobei die Hydraulikzylinder (7, 8) im Inneren der Luftfederelemente (4, 5) angeordnet sind.

3. Aufhängungseinrichtung nach Anspruch 1, **dadurch gekennzeichnet, dass** die Feder/Dämpfer-Anordnung (4, 5) eine einzige, in Fahrzeugquerrichtung mittig zwischen den Querbrücken angeordnete Federeinrichtung (17) umfasst.

4. Aufhängungseinrichtung nach Anspruch 3, **dadurch gekennzeichnet, dass** die Federeinrichtung durch ein Luftfederelement (17) gebildet ist.

5. Aufhängungseinrichtung nach einem der Ansprüche 1 bis 4, **dadurch gekennzeichnet, dass** die fluidische Verbindung (11, 12) zwischen den Hydraulikzylindern (7, 8) zumindest eine Drosseleinrichtung (15) und/oder zumindest eine Druckspeichereinrichtung (13) enthält.

6. Aufhängungseinrichtung nach einem der Ansprüche 1 bis 5, **dadurch gekennzeichnet, dass** die fluidische Verbindung (11, 12) zwischen den Hydraulikzylindern (7, 8) Komponenten zur aktiven Dämpfungsregelung enthält.

7. Aufhängungseinrichtung nach einem der Ansprüche 1 bis 6, **dadurch gekennzeichnet, dass** zwischen oberer und unterer Querbrücke (3, 2) eine im Wesentlichen horizontal wirkende Querdämpfer-Einrichtung (6) angeordnet ist.

8. Aufhängungseinrichtung nach einem der Ansprüche 1 bis 6, **dadurch gekennzeichnet, dass** zwischen oberer und unterer Querbrücke (3, 2) ein Panhardstab (16) zur horizontalen Stabilisierung angeordnet ist.

## Claims

1. Suspension device for the sprung and damping suspension of a driver's cab of a motor vehicle relative to a vehicle chassis (1), the suspension device comprising a spring/damper arrangement (4, 5) and a hydraulic arrangement with right-hand and left-hand (in relation to the driving direction) hydraulic cylinders (7, 8) with respective piston upper-side and piston lower-side cylinder spaces (9, 10), the piston upper-side and piston lower-side cylinder spaces (9, 10) of the right-hand and left-hand hydraulic cylinders (7, 8) being connected fluidically crosswise to a hydraulic roll stabilization device, **characterized in that** an upper crossmember (3) is arranged in the rear suspension region of the driver's cab and a lower crossmember (2) which is assigned to the upper crossmember (3) is arranged on the vehicle chassis (1), the spring/damper arrangement (4, 5) and the hydraulic arrangement being arranged between the two crossmembers (2, 3) and being connected to the crossmembers (2, 3).

2. Suspension device according to Claim 1, **characterized in that** the spring/damper arrangement (4, 5) is formed by way of left-hand and right-hand (in relation to the vehicle) air spring elements (4, 5), the hydraulic cylinders (7, 8) being arranged in the interior of the air spring elements (4, 5).

3. Suspension device according to Claim 1, **characterized in that** the spring/damper arrangement (4, 5) comprises a single spring device (17) which is arranged centrally in the vehicle transverse direction between the crossmembers.

4. Suspension device according to Claim 3, **characterized in that** the spring device is formed by way of an air spring element (17).

5. Suspension device according to one of Claims 1 to 4, **characterized in that** the fluidic connection (11, 12) between the hydraulic cylinders (7, 8) contains at least one throttling device (15) and/or at least one pressure accumulator device (13).

6. Suspension device according to one of Claims 1 to 5, **characterized in that** the fluidic connection (11, 12) between the hydraulic cylinders (7, 8) contains components for active damping control.

7. Suspension device according to one of Claims 1 to 6, **characterized in that** a substantially horizontally acting transverse damper device (6) is arranged between the upper and lower crossmembers (3, 2).

8. Suspension device according to one of Claims 1 to 6, **characterized in that** a Panhard rod (16) for horizontal stabilization is arranged between the upper and lower crossmembers (3, 2).

## Revendications

1. Dispositif de suspension pour la suspension à ressort et avec amortissement d'une cabine de conduite d'un véhicule automobile par rapport à un châssis de véhicule (1), le dispositif de suspension comprenant un agencement ressort/amortisseur (4, 5) et un agencement hydraulique avec des cylindres hydraulique (7, 8) du côté droit et du côté gauche, rapportés à la direction de conduite, avec des espaces de cylindre (9, 10) respectivement du côté supérieur du piston et du côté inférieur du piston, les espaces de cylindre (9, 10) du côté supérieur du piston et du côté inférieur du piston des cylindres hydrauliques (7, 8) du côté droit et du côté gauche étant connectés fluidiquement sous forme croisée pour former un dispositif de stabilisation de roulis hydraulique, **caractérisé en ce que** dans la région de suspension arrière de la cabine de conduite est disposé un pont transversal supérieur (3), et au niveau du châssis du véhicule (1) est disposé un pont transversal inférieur (2) associé au pont transversal supérieur (3), l'agencement de ressort/amortisseur (4, 5) et l'agencement hydraulique étant disposés entre les deux ponts transversaux (2, 3) et étant connectés aux ponts transversaux (2, 3).

2. Dispositif de suspension selon la revendication 1, **caractérisé en ce que** l'agencement de ressort/amortisseur (4, 5) est formé par des éléments de ressort pneumatique du côté gauche et du côté droit (4, 5), rapportés au véhicule, les cylindres hydrauliques (7, 8) étant disposés à l'intérieur des éléments de ressort pneumatique (4, 5).

3. Dispositif de suspension selon la revendication 1, **caractérisé en ce que** l'agencement de ressort/amortisseur (4, 5) comprend un dispositif de ressort unique (17), disposé dans la direction transversale du véhicule centralement entre les ponts transversaux.

4. Dispositif de suspension selon la revendication 3, **caractérisé en ce que** le dispositif de ressort est formé par un élément de ressort pneumatique (17).

5. Dispositif de suspension selon l'une quelconque des revendications 1 à 4, **caractérisé en ce que** la connexion fluidique (11, 12) entre les cylindres hydrauliques (7, 8) contient au moins un dispositif d'étranglement (15) et/ou au moins un dispositif accumulateur de pression (13).

6. Dispositif de suspension selon l'une quelconque des revendications 1 à 5, **caractérisé en ce que** la connexion fluidique (11, 12) entre les cylindres hydrauliques (7, 8) contient des composants pour la régulation active de l'amortissement.

7. Dispositif de suspension selon l'une quelconque des revendications 1 à 6, **caractérisé en ce qu'**entre les ponts transversaux supérieur et inférieur (3, 2) est disposé un dispositif d'amortisseur transversal (6) agissant essentiellement horizontalement.

8. Dispositif de suspension selon l'une quelconque des revendications 1 à 6, **caractérisé en ce qu'**entre les ponts transversaux supérieur et inférieur (3, 2) est disposée une barre Panhard (16) pour la stabilisation horizontale.
